# EUROPEAN PATENT APPLICATION

(11) **EP 4 372 384 A1**
(43) Date of publication of application: **22.05.2024**
(21) Application number: 22383111.6
(22) Date of filing: 17.11.2022
(51) Int. Cl.: G01N 35/00, G01N 35/02

(54) **METHOD FOR OPTIMIZING LABORATORY SYSTEM**

(71) Applicant: F. Hoffmann-La Roche AG, 4070 Basel (CH); Roche Diagnostics GmbH, 68305 Mannheim (DE)
(72) Inventor: The designation of the inventor has not yet been filed

(57) **Abstract**

The invention relates to a method for optimizing sample distribution in a laboratory system (1), the laboratory system (1) comprising at least a sample input unit (2), one or more sample buffer units (3), one or more analyzers (4), a transport system (5), and a control unit (6), the method comprising the following steps the control unit (6) retrieving (100) one or more test request for each of the samples provided to the laboratory system (1) via the sample input unit (2), the control unit (6) controlling (110) the transport system (5) to convey the provided samples to the one or more sample buffer units (3), the control unit (6) creating (120) run instructions to run one or more requested tests on selected samples on a test plate based on optimization criteria, the control unit (6) transmitting (130) the created run instructions to one analyzer (4), and the control unit (6) controlling (140) the transport system (5) to convey the selected samples for which one or more requested tests shall be executed from the sample buffer unit (3) to the one analyzer (4).

## Description

### Field of the Invention

The invention relates to a method for optimizing sample distribution in a laboratory system. The invention further relates to a laboratory system for performing such a method. The invention further relates to a computer program product comprising instructions to cause a laboratory system to execute the method for optimizing sample distribution and to a computer-readable storage medium having stored thereon said computer program product.

### Background

Laboratory devices as such are known in the art. In the last decades, big progresses have been made to laboratory devices, which relied much on a manual interaction of a user, to fully automated laboratory devices that can perform all or almost all of the necessary tasks automatically. A user needs only to provide a sample to the device, and all the necessary steps to provide a test result are then automatically executed by the laboratory device according to test specific protocols.

Another improvement in the field is the laboratory automation. In this case, one or more laboratory devices are connected to pre- and post-analytical devices via a transport system. In such an automated laboratory systems, samples are provided to the system and then routed to the necessary device (pre analytical, laboratory device, post analytical) depending to the test or tests to be performed.

There is however the problem in known laboratory systems that the throughput and occupation of a device is far from optimal. In existing devices, as a rule, different devices are dedicated to different tests. Therefore, a user has to manually sort out samples and group them depending on which device or devices the test or the pre analytical or post analytical steps will be performed. Another drawback of known devices is that the rules for routing the samples are often very rigid and therefore do not allow for chances, e.g. when a laboratory device of the laboratory system is performing badly, slowly or is having some problems.

In addition to this, it comes that known laboratory devices, in particular NAT laboratory devices, are optimized such that they can perform different tests on the same test plate (a plate with a plurality of wells), normally a 12x8 multiwell plate is used. The test are grouped together based on their compatibility, normally the thermal profile used during a NAT amplification reaction, since the thermal blocks of such laboratory devices are monolithic and cannot provide different temperature zones. In this way, throughput of the laboratory device is increased and waste of resources is reduced, since all or almost all the wells of a test plate are filled with a sample or a control and the reagents are not added to "empty" (meaning without a sample) wells, because in such systems, normally multi head pipettors are used and therefore no single wells of the plate can be excluded when adding fluids. Such an approach however also has drawbacks, since it is only device based and with a plurality of laboratory devices in the same laboratory system, the devices do not communicate with each other, with the resulting drawbacks. As an example, if different tests are requested for a sample, the sample first has to be aliquoted in different sample containers, because in general, laboratory devices can only handle a test per tube. In addition, if the test are run on different instruments, it should be ensured that the respective sample container is placed in a rack foreseen to be conveyed to the right laboratory device. In a highly automated laboratory system, this means that prior to adding the samples to the system; those have to be manually aliquoted. In addition, sample containers are often transported into racks hosting a plurality of them. Also in this case, a sorting of the containers is necessary in order to group samples designated for a specific laboratory device together, since otherwise the rack would then have to travel between different laboratory devices to perform different tests. It should be clear that every human interaction is a possible error cause, and there is the desire to fully automate laboratory systems while keeping flexibility and high throughput.

The problem is solved by a method for optimizing sample distribution in a laboratory system as claimed in the independent claim.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

Within the meaning of the present invention, a pre-analytic device is meant to be any component of the analytical system that can be used for performing pre-analytical steps such as, receiving the sample, reading sample information, label samples with analytical system specific labels and IDs, capping/decapping of sample containers, transfer and/or aliquoting samples from primary sample containers to secondary sample containers, mixing samples together, vortex or shake the samples, etc.

Within the meaning of the present invention, post-analytic device is meant to be any component of the analytical system that can be used for performing post-analytical steps such as receiving analyzed samples, storing the analyzed samples, convey the analyzed samples back to another component of the analytical system for further processing or outside of the analytical system for disposal.

According to the present invention the laboratory system comprises at least a sample input unit, one or more sample buffer units, one or more analyzers, a transport system for conveying the samples from the sample input to the sample buffer unit(s) and the analyzer(s), and a control unit connected to the sample input unit(s), the sample buffer unit(s), the analyzer(s) and the transport system.

Within the meaning of the present invention, a sample input unit is meant to be any component of the laboratory system used to provide access for the samples to the laboratory system. Samples arranged in sample containers are added to the laboratory system via the sample input unit. In a preferred embodiment, the sample input unit is a pre-analytical device that cannot only allow the sample to access the laboratory system, but can also perform pre-analytical steps.

Within the meaning of the present invention, a sample buffer unit is meant to be any component of the laboratory system that can be used to store samples for a given period of time, such as a cooled sample storage unit, but can also just be an area of the laboratory system where samples are stored and easily retrieved.

Within the meaning of the present invention, an analyzer is meant to be any component of the laboratory system that can be used to perform one or more tests on one or more samples. Preferably, the analyzer is a NAT analyzer; more preferred a PCR analysis device.

Within the meaning of the present invention, a transport system is meant to be any component of the analytical system that can be used for transporting the samples between other different components of the analytical system, such as e.g. a conveyor, and can be configured to transport one or more sample containers or one or more racks containing one or more sample containers.

Within the meaning of the present invention, a control unit is meant to be any component of the laboratory system that is connected or connectable, either wired or wirelessly, to the sample input unit(s), the sample buffer unit(s), the analyzer(s) and the transport system and can control at least some functionalities of those components. The control unit is preferably a dedicated computing unit, but may also be implemented in a distributed architecture with sub-components being shared with different devices and/or components of one or more laboratory systems.

The method according to the present invention comprises the following steps:
- the control unit retrieving one or more test request for each of the samples provided to the laboratory system via the sample input unit,
- the control unit controlling the transport system to convey the provided samples to the one or more sample buffer units,
- the control unit creating run instructions to run one or more requested tests on selected samples on a test plate based on optimization criteria,
- the control unit transmitting the created run instructions to one analyzer, and
- the control unit controlling the transport system to convey the selected samples for which one or more requested tests shall be executed from the sample buffer unit to the one analyzer.

In a first step, the control unit retrieves one or more test request for each of the samples provided to the laboratory system via the sample input unit. Upon providing a sample to the laboratory system via the sample input unit, the laboratory system reads a sample identification of the sample container (e.g. a barcode, QR-code, a RFID tag, a graphical recognition of a sample container identification code, etc.) and retrieves for the samples, information about which test or tests shall be performed on the sample contained in the sample container. The test request(s) may be retrieved e.g. from a LIS. In the case where more sample containers are arranged on a rack, it is advantageous to also retrieve a rack identifier and link the sample identifications of the samples arranged in the rack to the rack identifier to simplify the later conveying of the rack.

In a second step, the control unit controls the transport system to convey the provided samples to the one or more sample buffer units. Samples added to the laboratory system are conveyed to a sample buffer unit to be stored there until further processing. As cited above, the sample buffer unit may be configured as a pre analytical unit, so that depending on the sample and/or test request(s) for the sample, pre analytical steps may already be performed at this stage in order to be able, as will be explained later in greater detail, directly convey the sample to an analyzer for further analysis.

In a third step, the control unit creates run instructions to run one or more requested tests on selected samples on a test plate based on optimization criteria. As already cited above, grouping of different test(s) on the same test plate is a common practice in known analyzers. This is however mostly done on the analyzer itself and based on the thermal profile of the NAT test that has to be performed. According to the present invention, the control unit creates run instruction comprising at least information about the samples to be analyzed on the test plate, the test(s) to be performed on the test plate, the position of the samples and, if necessary, of controls, on the test plate and the analyzer (in the case where a plurality of analyzers is part of the laboratory system) that shall handle the test plate. The creation of the run instructions takes into consideration different optimization criteria and not just the thermal profile of the tests to be performed on the same plate as in known analyzers.

By creating the run instructions, it can be guaranteed that, as will be explained below in more detail, the samples are processed successfully and the throughput of the analyzer, and therefore of the laboratory system to which the analyzer belongs, is optimized, leading to a correct, on time delivery of the test results with optimized waste of resources and optimized time management. This also allows to reduce the interactions of a user with the laboratory system, enabling a laboratory technician to concentrate on supervising the laboratory operations.

In a fourth step, that means after the creation of the run instruction, the control unit transmits the created run instructions to the analyzer that has been determined to be the optimal choice based on the optimization criteria.

Finally, in a fifth step, the control unit controls the transport system to convey the selected samples for which one or more requested tests shall be executed on a test plate from the sample buffer unit to the one analyzer.

Preferably, the optimization criteria are one or more selected from:
- test request for samples already present in the sample buffer and/or in the system,
- test request for samples already present in the one analyzer
- the availability of the one or more analyzers,
- the number and type of controls to be used on a test plate,
- the ratio of samples/controls present on a test plate,
- the thermal profile of the requested test,
- the amount of a reagent loaded on an analyzer,
- the expiration time/date of a reagent loaded on an analyzer,
- the expiration time/date of the sample
- the actual daytime,
- the cost for a test,
- the target time for a test result to be delivered,
- the resting time of a sample in the laboratory system,
- the travel time of a sample between two specific locations of the laboratory system,
- user specific preferences,

The method may consider one or more test requests for samples already present in the sample buffer and/or in the system when creating the run instructions. The method may also consider only one or more test requests for a samples present in a specific sample buffer or a group of a sample buffers, as well as samples present only in a specific region of the laboratory system. As an example, in a large laboratory system, the method may sub-divide the laboratory system into different regions that may comprise a plurality of components and only use the regions when creating the run instructions, e.g. when two samples that could be combined on a same plate are arranged too far away from each other, it could be determined that waiting for the two samples to reach the desired analyzer would take too much time and therefore one or both samples could be excluded from the run instructions.

The method may consider one or more test requests for samples already present in an analyzer when creating run instructions. In some cases, it could be the case that samples are conveyed to one analyzer but the run instructions are than changed, e.g. because of samples that have to be analyzed as a priority or because additional controls have to be included on the plate instead of samples, as in the case when a reagent change is necessary while a test plate is being prepared for analysis). In this case, the sample may rest in the instrument awaiting further processing, and the method would consider the samples already present in the analyzer when creating the run instructions for the analyzer for a subsequent test plate to be analyzed.

The method may consider the availability of one or more analyzers when creating run instructions, therefore preferably selecting an analyzer that is available to perform the created run instructions. However, availability may also mean that a specific analyzer is defined as a preferred analyzer for one or more tests; therefore, the run instructions comprising those tests may be assigned to this analyzer, even if it is not available at the moment. In addition, the processing time for a given analyzer may be considered. As in the previous example, it may be determined that the preferred analyzer for a specific test has already a queue of run instructions and therefore is not considered when new run instructions are created by the control unit.

The method may consider the number and/or type of controls to be used on a test plate when creating the run instructions. Depending on the analysis protocol, specific controls (negative and/or positive) are needed in a different amount. The method may consider this, in particular the price of the controls, when creating the run instructions. It may be advantageous to only assign samples to a test plate where the number of expensive controls to be used on the plate is low or zero, e.g. because the reagents used on the analyzer have been already validated/calibrated in a previous run.

The method may consider the ratio of samples/controls present on a test plate when creating the run instructions. As cited above, controls are expensive. Therefore, the method may consider a threshold value of samples to controls ratio and only assign samples to the run instructions if the samples/control ratio is below a threshold value, which may be pre-defined or defined by the user.

The method may consider the thermal profile of the requested test when creating the run instructions. Depending on the analyzer type, e.g. a thermoblock with only one temperature zone), the method may assign different tests to the same test plate if the tests share the same thermal profile of the amplification cycle. In case the thermoblock has more than one temperature zone, it will handle accordingly by considering both thermal zones.

The method may consider the amount of a reagent loaded on an analyzer when creating the run instructions. The control unit may retrieve from the analyzer status information regarding the amount of specific reagents for specific tests and then only allocate an amount of samples to the test plate that can be analyzed with the available amount of reagent, therefore avoiding a change of reagent on a test plate, which would cause a loss of time and the necessity to add additional controls for the new reagent.

The method may consider the expiration time/date of a reagent loaded on an analyzer when creating the run instructions. The control unit may retrieve from the analyzer status information regarding the expiration of specific reagents and then allocate the respective test to this analyzer before the reagent expires, therefore avoiding a change of reagent on a test plate, which would cause a loss of time and the necessity to add additional controls for the new reagent.

The method may consider the expiration time/date of the sample when creating the run instructions. The control unit may retrieve information about an expiration of the sample upon loading of the sample into the laboratory system to guarantee that the sample is being analyzed before expiration of the same.

The method may consider the actual daytime when creating the run instructions. The control unit may have knowledge of different time constraints, e.g. that a result for a specific test should be available not later than a given time deadline in order to guarantee that the sample is being analyzed before the given time deadline. The control unit may also have knowledge of the working hours of the laboratory and/or the shift duration of the laboratory and therefore guarantee that some or all of the samples loaded on the laboratory system are processed before closing of the laboratory and/or end of the shift.

The method may consider the cost for a test when creating the run instructions. As an example, the control unit may calculate the actual cost for a specific test included in a run instruction (considering the cost of controls, consumables, reagents, etc.) and may have a predefined test cost threshold that shall not be exceeded when creating the run instructions, and could therefore determine if the test shall be included in the actual run instruction being created or not, or additional samples shall be added to reduce the average test cost for every sample.

The method may consider the target time for a test result to be delivered when creating the run instructions. Specific tests or samples may e.g. be defined as "urgent" and a maximum delivery time for the test results can be set. The control unit would therefore consider this "urgent" test and guarantee that they are processed before exceeding the maximum delivery time for the test results.

The method may consider the resting time of a sample in the laboratory system when creating the run instructions. The control unit may have a maximum resting time for a test or for a specific sample predefined or defined by a user, and would therefore consider this maximum resting time to guarantee that the sample is processed before reaching the maximum resting time.

The method may consider the travel time of a sample between two specific locations of the laboratory system when creating the run instructions. Especially in large laboratory systems, samples may be distributed over a wide area of the laboratory system. The control unit may therefore calculate the travel time of a sample between two specific locations of the laboratory system, e.g. between a sample buffer unit and an analyzer, and determine if the sample should be taken into consideration for inclusion in a specific run instruction, in particular to meet other time critical optimization criteria as cited above.

The method may consider user specific preferences when creating the run instructions. The user may, e.g. define different analyzers to be specific for one or more specific test or sample types, or the user may define different working periods where specific assays or sample types should be handled with priority. Of course, all of the optimization criteria cited above may include factors that can be defined by a user.

Preferably, the method further comprises the steps of:
- the one analyzer receiving the selected samples,
- the one analyzer creating analyzer specific run instructions,
- the one analyzer transmitting the analyzer specific run instructions,
- the control unit receiving the analyzer specific run instructions,
- the control unit comparing the created run instructions with the analyzer specific run instructions,
- the control unit determining a difference between the created run instructions and the analyzer specific run instructions,
- the control unit creating updated run instructions based on optimization criteria and the determined difference between the created run instructions and the analyzer specific run instructions,
- the control unit transmitting the updated run instructions to the one analyzer, and
- the control unit optionally controlling the transport system to convey the samples for which one or more requested tests shall be executed from the sample buffer unit to the one analyzer and/or from the one analyzer to the sample buffer unit.

In some cases it could happen that, due circumstances happening between the creation of the run instructions and the samples being processed by the analyzer, that the run instructions may not be executed completely or in part. As an example, samples may not reach the analyzer due to conveying problems, or controls have to be included on a test plate due to a reagent change on the instrument, or urgent samples are loaded on the instrument and shall be analyzed instead of samples present in the run instructions, etc. Therefore, it is preferable that the analyzer creates analyzer specific run instructions for a given test plate and that those analyzer specific run instructions are transmitted to the control unit for comparison and further optimization. If the analyzer specific run instructions are equal to the run instructions originally created by the control unit, the control unit may transmit instructions to perform analysis based on the run instructions. Alternatively, the analyzer itself may compare the run instructions with the analyzer specific run instructions and only transmit then if a difference is determined, and otherwise proceed further with analysis. In the case where the control unit determines a difference between the analyzer specific run instructions and the originally created run instructions, the control unit may create updated run instructions (which may be equal to the analyzer specific run instructions or even further optimized run instructions) and transmit them to the analyzer for further processing. Depending on the updated run instructions, it may be necessary that samples should be conveyed to the analyzer and/or conveyed away from the analyzer. Therefore, the control unit may optionally control the transport system to convey the samples for which one or more requested tests should be executed from the sample buffer unit to the one analyzer and/or from the one analyzer to the sample buffer unit.

Preferably, the method further comprises the steps of:
- the one analyzer receiving the selected samples,
- for each of the received samples, the one analyzer transmitting information to the control unit that the sample has been received by the analyzer,
- the control unit updating a run status of the one analyzer with the information received by the one analyzer.

In this case, the control unit can monitor in real time that the specific samples that have been included in the run instructions are effectively received by the analyzer. In addition, the control unit may also monitor the time at which the samples are received and a timeframe between transmission of the run instructions to the analyzer and receipt of the samples by the analyzer.

More preferred, the method further comprises the steps of:
- the control unit transmitting updated run instructions to the one analyzer to run the one or more selected tests with the samples received by the one analyzer if the number of samples received by the one analyzer is less than the number of samples conveyed to one analyzer.

In this case, the control unit would determine that not all the samples have been conveyed to the analyzer, in particular within a given time period, and can therefore determine if analysis of the samples present in the analyzer shall be performed or not.

Alternatively, the method further comprises the steps of:
- the control unit transmitting prompting an user to check the one analyzer if the number of samples received by the one analyzer is less than the number of samples conveyed to one analyzer.

In case where the control unit determines that the amount of samples included in the run instructions is higher than the samples received by the analyzer, in particular if a given threshold difference is exceeded, the user could be prompted by a text and/or visual and/or audio signal on a the analyzer, the laboratory system, a computer, a mobile device, a smartwatch, etc. to check for problems on the analyzer.

Preferably the test plate according to the present invention is a multi-well-plate comprising a plurality of wells arranged in rows and columns, more preferred a 96-well-plate with 12 rows and 8 columns, and the run instructions comprise instructions to arrange in a row of the test plate only selected samples and/or controls for a requested test.

As cited above, depending on the analyzer used and the pipetting system comprised by the analyzer, it is only possible to dispense reagents to the plate to one row of the test plate, therefore, the run instructions would take this into consideration by only arranging in a row of the test plate samples and/or controls belonging to the same test. Preferably, the run instructions comprise instructions to fill the entirety of the row of the test plate with samples and/or controls belonging to the same test in order to avoid waste of reagents and consumables.

The invention further relates to a laboratory system, comprising at least a sample input unit, one or more sample buffer units, one or more analysers, a transport system for conveying the samples from the sample input to the sample buffer unit and the analyzer, and a control unit connected to the sample input unit, the sample buffer unit, the analyzer and the transport system, the laboratory system being configured to perform a method according to one of the preceding claims.

The above description relating to the method of the present invention therefore applies accordingly to a laboratory system according to the present invention. In particular, the laboratory system may include a plurality of sample input units, sample buffer units, analysers and transport systems.

Preferably, the method or the system further comprises a pre analytical device for performing pre analytical steps and in particular for grouping sample containers containing a sample for which a particular test has been requested on a common sample containers rack holder. It shall be noted that in this case, the pre analytical device does not necessarily has to be configured as a sample input unit, but may be arranged within the laboratory system at any given location. In this case, the pre analytical device would be connected by the control unit and the control unit would be configured to instruct the pre analytical device to perform certain pre analytical steps including grouping of sample containers on a rack holder.

The invention further relates to a computer program product comprising instructions to cause the laboratory system according to the present invention to execute the steps of the method according to the present invention.

The invention relates further to a computer-readable storage medium having stored thereon the computer program product according to the present invention.

### Short description of the figures

**Fig. 1** depicts a schematic representation of a laboratory system according to an embodiment of the present invention.
**Fig. 2** depicts a schematic representation of a laboratory system according to another embodiment of the present invention.
**Fig. 3** depicts a flow chart of the method according to the present invention

### Detailed description of the figures

The invention will be described now by way of preferred embodiments in connection with the drawings and the above description.

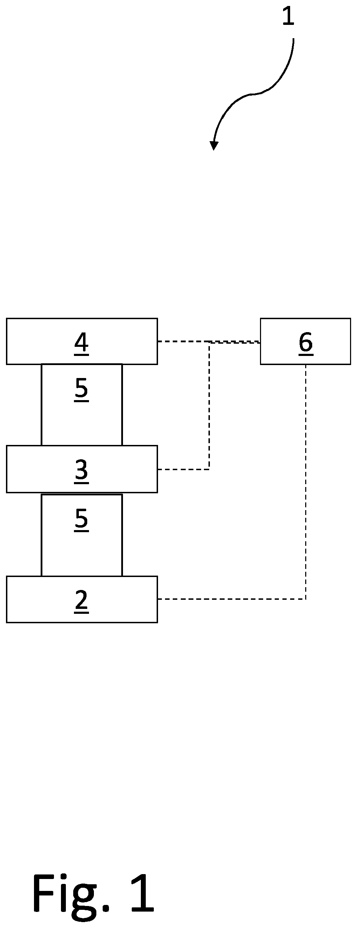

Figure 1 shows schematically a relatively small laboratory system 1, comprising a sample input unit 2, a sample buffer unit 3, an analyzer 4, a transport system 5 and a control unit 6 connected to the sample input unit 2, the sample buffer unit 3, the analyzer 4 and the transport system 5, schematically represented by the dotted line.

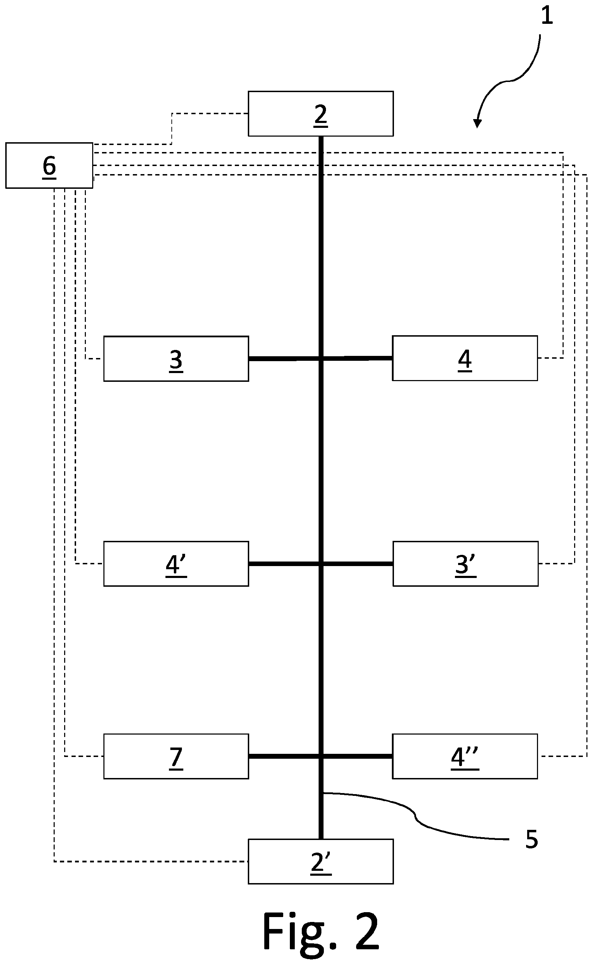

Figure 2 shows schematically a relatively large laboratory system 1, comprising sample input units 2 and 2', sample buffer units 3 and 3', analyzers 4, 4' and 4", a transport system 5, a pre analytical device 7 and a control unit 6 connected to the sample input units 2 and 2', the sample buffer units 3 and 3', the analyzers 4, 4' and 4", the transport system 5 and the pre analytical device 7, schematically represented by the dotted line.

As can bee seen from the figures 1 and 2, both laboratory systems 1 share a common approach, the only difference being the amount and arrangement of the components and the presence of a dedicated pre analytical device 7 in the example of figure 2.

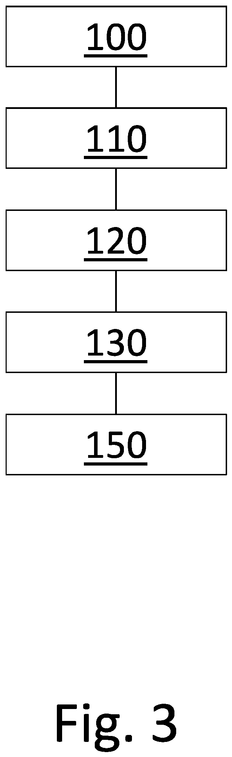

Figure 3 shows a flowchart of the method according to the present invention, which will be described with respect to the laboratory system of figure 2. However, the method depicted in figure 3 may be applied accordingly to the laboratory system 1 of figure 1.

In a first step 100, the control unit 6 retrieves one or more test request for each of the samples provided to the laboratory system 1 via the sample input units 2 and 2'. The sample input units 2 and 2' may be configured to accept only specific sample containers or racks for sample containers.

Upon providing a sample to the laboratory system1 via the sample input units 2 and 2', the laboratory system 1 reads a sample identification of the sample container (e.g. a barcode, QR-code, a RFID tag, a graphical recognition of a sample container identification code, etc.) and retrieves for the samples, information about which test or tests shall be performed on the sample contained in the sample container. The test request(s) may be retrieved e.g. from a LIS. In the case where more sample containers are arranged on a rack, it is advantageous to also retrieve a rack identifier and link the sample identifications of the samples arranged in the rack to the rack identifier to simplify the later conveying of the rack.

In a second step 110, the control unit 6 controls the transport system 5 to convey the provided samples to the sample buffer units 3 and 3'. Samples added to the laboratory system1 are conveyed to a sample buffer unit (3 or 3') to be stored there until further processing. The sample buffer unit 3 or 3' may be configured for storage of specific sample types, sample container types or rack types.

As cited above, the sample buffer unit 3 or 3' may be configured as a pre analytical unit, so that depending on the sample and/or test request(s) for the sample, pre analytical steps may already be performed at this stage in order to be able to directly convey the sample to an analyzer 4, 4' or 4" for further analysis.

If necessary, the control unit 6 may route samples by controlling the transport system 5 to the pre analytical device 7 to per form pre analytical steps and in particular to group sample containers on racks depending on the sample container type, sample type, test request, etc.

In a third step 120, the control unit 6 creates run instructions to run one or more requested tests on selected samples on a test plate based on optimization criteria. According to the present invention, the control unit 6 creates run instruction comprising at least information about the samples to be analysed on the test plate, the test(s) to be performed on the test plate, the position of the samples and, if necessary, of controls, on the test plate and one of the analyzers 4, 4' or 4" that shall handle the test plate . The creation of the run instructions takes into consideration different optimization criteria.

By creating the run instructions, it can be guaranteed that, the samples are processed successfully and the throughput of the analyzer 4, 4' and 4", and therefore of the laboratory system 1 , is optimized, leading to a correct, on time delivery of the test results with optimized waste of resources and optimized time management. This also allows to reduce the interactions of a user with the laboratory system.

In a fourth step 130, that means after the creation of the run instruction, the control unit 6 transmits the created run instructions to the analyzer 4 that has been determined to be the optimal choice based on the optimization criteria.

Finally, in a fifth step 150, the control unit controls the transport system 5 to convey the selected samples for which one or more requested tests shall be executed on a test plate from the sample buffer units 3 and 3' to the analyzer 4.

## Claims

1. A method for optimizing sample distribution in a laboratory system (1), the laboratory system (1) comprising at least:
- a sample input unit (2),
- one or more sample buffer units (3),
- one or more analyzers (4),
- a transport system (5) for conveying the samples from the sample input (2) to the sample buffer unit (3) and the analyzer (4), and
- a control unit (6) connected to the sample input unit (2), the sample buffer unit (3), the analyzer (4) and the transport system (5),
the method comprising the following steps:
- the control unit (6) retrieving (100) one or more test request for each of the samples provided to the laboratory system (1) via the sample input unit (2),
- the control unit (6) controlling (110) the transport system (5) to convey the provided samples to the one or more sample buffer units (3),
- the control unit (6) creating (120) run instructions to run one or more requested tests on selected samples on a test plate based on optimization criteria,
- the control unit (6) transmitting (130) the created run instructions to one analyzer (4), and
- the control unit (6) controlling (140) the transport system (5) to convey the selected samples for which one or more requested tests shall be executed from the sample buffer unit (3) to the one analyzer (4).

2. The method of claim 1, wherein the optimization criteria are one or more selected from:
- test request for samples already present in the sample buffer and/or in the system,
- test request for samples already present in an analyzer (4)
- the availability of the one or more analyzers (4),
- the number and type of controls to be used on a test plate,
- the ratio of samples/controls present on a test plate,
- the thermal profile of the requested test,
- the amount of a reagent loaded on an analyzer (4),
- the expiration time/date of a reagent loaded on an analyzer (4),
- the expiration time/date of the sample
- the actual daytime,
- the cost for a test,
- the target time for a test result to be delivered,
- the resting time of a sample in the laboratory system (1),
- the travel time of a sample between two specific locations of the laboratory system (1),
- user specific preferences,

3. The method of claim 1 or 2, comprising the further steps of:
- the one analyzer (4) receiving the selected samples,
- the one analyzer (4) creating analyzer specific run instructions,
- the one analyzer (4) transmitting the analyzer specific run instructions,
- the control unit (6) receiving the analyzer specific run instructions,
- the control unit (6) comparing the created run instructions with the analyzer specific run instructions,
- the control unit (6) determining a difference between the created run instructions and the analyzer specific run instructions,
- the control unit (6) creating updated run instructions based on optimization criteria and the determined difference between the created run instructions and the analyzer specific run instructions,
- the control unit (6) transmitting the updated run instructions to the one analyzer (4), and
- the control unit (6) optionally controlling the transport system (5) to convey the samples for which one or more requested tests shall be executed from the sample buffer unit (3) to the one analyzer (4) and/or from the one analyzer (4) to the sample buffer unit (3).

4. The method of one of the preceding claims, further comprising the steps of:
- the one analyzer (4) receiving the selected samples,
- for each of the received samples, the one analyzer (4) transmitting information to the control unit (6) that the sample has been received by the analyzer (4),
- the control unit (6) updating a run status of the one analyzer (4) with the information received by the one analyzer (4).

5. The method of claim 4, further comprising the steps of:
- the control unit (6) transmitting updated run instructions to the one analyzer (4) to run the one or more selected tests with the samples received by the one analyzer (4) if the number of samples received by the one analyzer (4) is less than the number of samples conveyed to one analyzer (4).

6. The method of claim 4, further comprising the steps of:
- the control unit (6) transmitting prompting an user to check the one analyzer (4) if the number of samples received by the one analyzer (4) is less than the number of samples conveyed to one analyzer (4).

7. The method of one of the preceding claims, wherein the test plate is a multi-well-plate comprising a plurality of wells arranged in rows and columns, preferably a 96-well-plate with 12 rows and 8 columns, and wherein the run instructions comprise instructions to arrange in a row of the test plate only selected samples and/or controls for a requested test.

8. A laboratory system (1), comprising at least:
- a sample input unit (2),
- one or more sample buffer units (3),
- one or more analyzers (4),
- a transport system (5) for conveying the samples from the sample input to the sample buffer unit (3) and the analyzer (4), and
- a control unit (6) connected to the sample input unit (2), the sample buffer unit (3), the analyzer (4) and the transport system (5),
the laboratory system (1) being configured to perform a method according to one of the preceding claims.

9. A computer program product comprising instructions to cause the laboratory system (1) according to claim 8 to execute the steps of the method according to any one of claims 1 to 7.

10. A computer-readable storage medium having stored thereon the computer program product of claim 9.
